# EUROPEAN PATENT APPLICATION

(11) **EP 4 582 724 A1**
(43) Date of publication of application: **09.07.2025**
(21) Application number: 24150453.9
(22) Date of filing: 04.01.2024
(51) Int. Cl.: F16K 27/02

(54) **HOUSING ASSEMBLY FOR USE IN A HEAT EXCHANGE SYSTEM**

(71) Applicant: Danfoss A/S, 6430 Nordborg (DK)
(72) Inventor: BIRKELUND, Michael, 6430 Nordborg (DK); THERKILDSEN, Kristian, 6430 Nordborg (DK); PAWLIK, Jens, 6430 Nordborg (DK)
(74) Representative: Patentanwälte Olbricht Buchhold Keulertz

(57) **Abstract**

The present invention pertains to a housing assembly for use in a heat exchange system. The housing assembly comprises an aluminium housing (1) with at least one fluid port connected to a bi-metal connector (2), wherein the bi-metal connector comprises an inner and outer copper layer and an intermediate metallic layer made of a different material than the inner and outer copper layer, and wherein the aluminium housing comprises at least one connection portion for connecting the bi-metal connector.

## Description

The present invention pertains to a housing assembly for use in a heat exchange system. The housing assembly comprises an aluminium housing with at least one fluid port connected to a bi-metal connector, wherein the bi-metal connector comprises an inner and outer copper layer and an intermediate metallic layer made of a different material than the inner and outer copper layer, and wherein the aluminium housing comprises at least one connection portion for connecting the bi-metal connector.

Housing assemblies for use in heat exchange systems are pressure tight compartments for components such as valves and/or sight glasses. The housing assemblies are designed for use with refrigeration or air conditioning systems. They may be the component of the corresponding system, which are subjected to the system pressure and have the primary function of containing the system pressure. There are typically no restrictions on the components inside the housing with regards to their capability to handle pressure. The housing assemblies are typically made of brass such that they can easily be joined to copper fluid conduits. Typically, refrigeration systems or heat exchange systems have copper conduits in which a refrigerant fluid flows. Valve housings and other housings are typically made out of brass.

The housing assembly can have secondary functions like providing flow paths, guiding surfaces, sliding surfaces and similar mechanical, thermal, flow-related or thermodynamic functions. A typical refrigeration valve housing assembly or line component housing assembly will have one or more fluid ports, depending on the required function and/or design. These fluid ports are used to connect the internal void i.e. the pressurized part of the housing assembly with the system, to which the housing assembly is connected. When connecting a line component or valve to a system, brazing is the industry standard of installation, though there are other principles like glue/sealant based methods, threaded connections, flare connectors etc.

When mounting valves with brass housings and cupper connectors in a refrigeration system with copper conduits in the field, typically challenges are encountered such as debrazing of the valve connectors from the brass housing and a significant influx of heat, which may harm elements within the valve, such as e.g. O-rings and gaskets.

Instead of using brass for the housing, aluminium housing assemblies may be used for e.g. cost reasons or to reduce the amount of lead in the housing alloy. These aluminium housings typically still need to be fluidly connected to copper conduits at the site of the heat exchange system. This may lead to problems related to the connection of the dissimilar materials of the housing and the copper conduits. For example, galvanic corrosion may occur on the outer surfaces of aluminium components. Existing heat conductance issues are also getting worse, as aluminium conduits conduct heat better than brass conduits.

Once the conduit is joined to the housing, the joint is required to be cleaned and excess material needs to be removed in case of e.g. friction welded joints. Furthermore, in order to ensure correct functioning of the housing assembly, the housing assembly needs to be leak tested prior to its use. The above items are typically difficult to handle in the field, especially for joints of dissimilar material components.

The aim of the present invention is to overcome the problems mentioned above. This aim is attained by an improved housing assembly according to claim 1 and a set according to claim 8. Preferable embodiments are subject to the dependent claims.

According to claim 1, a housing assembly for use in a heat exchange system is provided. The housing assembly comprises an aluminium housing with at least one fluid port connected to a bi-metal connector, wherein the bi-metal connector comprises an inner and an outer copper layer and an intermediate metallic layer made of a different material than the inner and outer copper layer, and wherein the aluminium housing comprises at least one connection portion for connecting the bi-metal connector.

The presently described housing assembly comprises the aluminium housing or body and a connector of a different material than the aluminium housing. It is possible to use highly specialized joining equipment at e.g. a production site of the housing assembly for joining the different materials of the housing assembly's components. This opens the opportunity of using joining methods that are not suitable in the field and may be difficult to handle for certain users of the housing assembly, such as OEMs.

The above outlined problems of the prior art are solved by using a metallic connector with copper coating on the inside and outside. The coating can be applied mechanically. An alternative approach is to apply the coating via a galvanic coating. This will easily place copper on both the inside and outside of the connector. Such a connector may not be used with standard aluminium housings due to galvanic corrosion occurring on the outer surface of the aluminium component. Accordingly, a modified e.g. coated housing may be used.

When replacing the typical brass housing with an aluminium housing, the heat influx increases as well as the risk of galvanic corrosion happening on the outer surface of the valve due to dew condensing on the valve housing exposed to atmospheric oxygen. These obstacles are overcome or reduced by using bimetal connectors.

Bimetal connectors are metallic tubes with an e.g. 40 micrometre layer of copper. They reduce the heat influx, as a metal or alloy can be selected for the connector, which is a considerably poorer heat conductor than outer copper layer. Galvanic corrosion is also reduced, as iron, which may be contained in the connector, is closer to aluminium than to copper components in terms of their respective galvanic potential.

The present inventions makes it possible to utilize non-hot assembly methods like friction welding or magnetic pulse welding, which have the advantage that they cannot be easily destroyed or debrazed when the housing assembly is installed in the field or at an OEM. It is possible to easily connect the presently described housing assembly to e.g. copper pipes, even though the housing assembly comprises an aluminium housing. This means that standard methods, which are used, for connecting copper housings to copper pipes may be used for connecting the aluminium housing of the presently described housing assembly to copper pipes via the connector. As a result, from a practical point of view, the presently described housing assembly may be handled as if it was made of brass and/or copper rather than aluminium.

The present invention simplifies the replacement of brass housings with aluminium housings. Aluminium is cheaper than brass and the price difference is expected to grow over time. Furthermore, aluminium can be reused easier compared to brass and therefore it is considered to be the better choice from an environmental point of view.

In a preferred embodiment of the invention, the connection portion comprise threaded portions, welding portions, and/or brazing portions and/or the intermediate metallic layer is made of steel, preferably stainless steel and/or at least two connection portions are provided. In an embodiment with two connection portions, the connection portions may be oriented coaxially with respect to each other. The connection portion may protrude from a central structure of the aluminium housing and/or may be formed integrally with the remainder of the aluminium housing.

In a preferred embodiment of the invention, the connection between the bi-metal connector and the housing comprises a galvanic corrosion protection. The housing and the bi-metal connector may be protected by a coating layer such as a paint coat or a varnish layer and/or by an external protection such as a heat shrinkable tubing. The galvanic corrosion protection may be provided at any portion of the housing which contacts other metallic components of different metallic properties, such as the bi-metal connector.

In another preferred embodiment of the invention, the inner and/or outer copper layer is brazed and/or welded and/or glued and/or press fit to the aluminium housing. The connector may comprise some flange portion oriented in a radial direction of the connector. The copper layers may be provided at least partially on the flange portion for contacting the connection portion of the aluminium housing.

In another preferred embodiment of the invention, the bi-metal connector is threaded, furnace brazed, conveyor belt brazed, induction brazed, laser brazed, laser welded without a filler, laser welded with a filler, stir welded, rotational welded, ultrasonic welded, electromagnetic pulse welded, TIG welded, and/or MIG welded to the aluminium housing. Typically, a single joining technology may be used. However, combinations of two or more of the above joining technologies may be applied in alternative embodiments. A gasket or sealing such as a metallic or polymer sealing can typically be used in combination with a threaded connection between the bi-metal connector and the housing. The bi-metal connector may be mechanically connected, e.g. screwed or press fit to the to the aluminium housing. When the bi-metal connector is mechanically connected to the aluminium housing, additional connection means such as gluing of the bi-metal connector and in particular its inner and/or outer copper layer to the aluminium housing may be provided.

In another preferred embodiment of the invention, the intermediated metallic layer is covered partially or completely by the inner and/or outer copper layer. An interior and/or exterior side of the metallic layer may be connected to the adjacent sides of the inner and/or outer copper layers via e.g. a material connection.

In another preferred embodiment of the invention, a sleeve nut is screwed to the threaded portion of the connection portion and a portion of the bi-metal connector is provided between the sleeve nut and the connection portion. The flange portion of the bi-metal connector may hence be used for receiving a pressure from the sleeve nut, forcing the connector against the connection portion of the aluminium housing. In an alternative embodiment, the bi-metal connector is threaded such that it can be screwed directly to the threaded connection portion of the housing.

The invention is also directed at a set comprising an aluminium housing, at least one bi-metal connector and a sleeve nut for a housing assembly according to at least claim 7. The set may be provided in a state, in which its components are at least partially disconnected from each other. A user may connect the components according to existing requirements. The components may be arranged in a single dedicated package. Alternatively, the components may be provided separated from each other first and brought together only at a later stage. The components of the present invention's housing assembly may therefore be provided in a separated state, but still be covered by the present invention's scope.

Further details and advantages of the invention are described with reference to the figures. The figures show:
Figure 1: a perspective view of a first embodiment of the housing assembly;
Figure 2: a section view of the first embodiment of the housing assembly;
Figure 3: a detailed section view of the first embodiment of the housing assembly;
Figure 4: a perspective view of a second embodiment of the housing assembly;
Figure 5: a section view of the second embodiment of the housing assembly; and
Figure 6: a detailed section view of the second embodiment of the housing assembly.

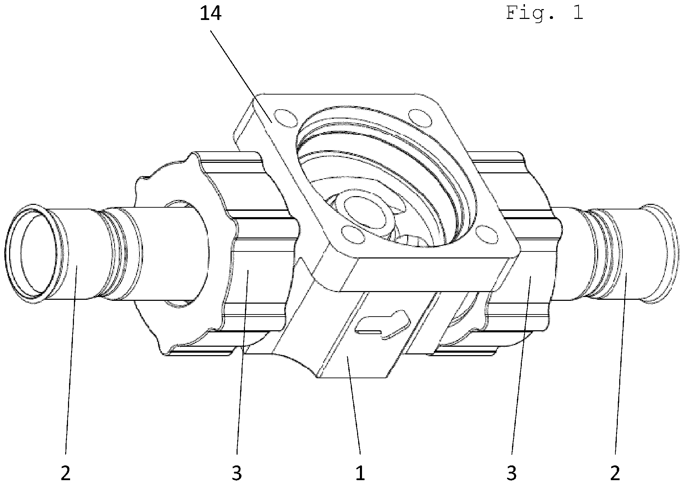

Figure 1 shows a perspective view of a first embodiment of the housing assembly. The housing assembly is provided for use in a heat exchange system, such as an air conditioning system, a heat pump or a refrigeration application. The housing assembly comprises an aluminium housing 1 to which two bi-metal connectors 2 are connected. However, an aluminium housing 1 could be provided, to which only one bi-metal connector 2 is connectable. The term bi-metal connector 2 refers to a connector 2 which comprises at least two different metallic sub-portions which are typically firmly bonded to each other permanently via e.g. an electroplating process. In the first embodiment, sleeve nuts 3 or similar structures may be provided for fixing the connectors 2 to the aluminium housing 1. The connectors 2 may be provided on opposite sides of the aluminium housing 1. The connectors 2 may be formed cylindrically and/or may be arranged coaxially to each other.

The aluminium housing 1 may comprise a side flange portion 14. The side flange portion 14 is provided for connecting valve elements, sight glasses or other components to the housing assembly. The side flange portion 14 may be connected to a side housing containing said valve elements and/or other components. The side flange portion 14 may be arranged in parallel to the axes of the connectors 2. The side flange portion 14 may comprise an opening, which communicates with the inside of the aluminium housing 1.

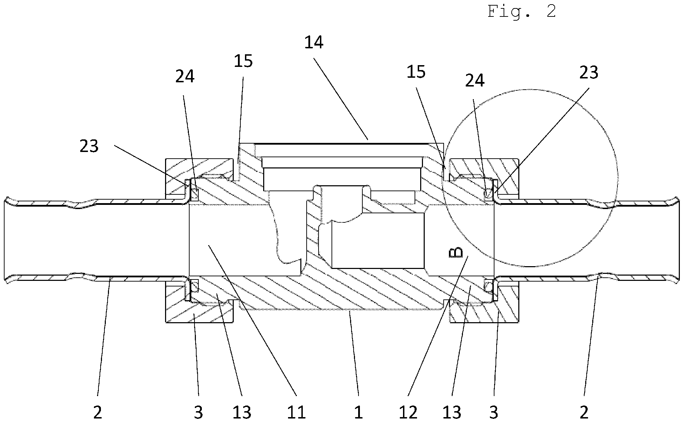

Figure 2 shows a section view of the first embodiment of the housing assembly. The aluminium housing 1 comprises at least two fluid ports 11, 12. The fluid ports 11, 12 may communicate with the side flange portion 14. Each fluid port 11, 12 is fluidly connected to a bi-metal connector 2. The connectors 2 contact connection portions 13 of the aluminium housing 1.

The connectors 2 comprise a flange portion 23 each, which is an end portion of the connectors 2 contacting the aluminium housing 1. The connectors 2 are pressed against the aluminium housing 1 via the flange portions 23 by means of the sleeve nuts 3. The flange portions 23 may have the same outer diameter as the fluid ports 11, 12 at their contact surface. The housing 1 may be at least partially coated such that a direct contact between the housings' 1 aluminium and the connector's copper is inhibited and a galvanic isolation is provided between the two different metals. The coating may be provided at the connection portion 13, preferably at the axially outermost part of the connection portion 13 contacting the connector 2. Any surface of the housing 1 contacting the connector 2 may be coated. The coating may comprise polyimide or other synthetic materials. The coating of the housing 1 may correspond to a non-conductive isolation layer that prevents water from establishing an electrically conductive path between the copper of the connector 2 and the and aluminium of the housing 1. This can be achieved by a coating and/or a plate of a non-conductive material, arranged between the adjacent copper and aluminium portions. Alternatively, a non-conductive layer can be arranged so that it covers the access to the copper - aluminium interface. This layer can comprise paint, heat shrinking tubing or the like. The paint and the heat shrinking tubing may be added after assembly of the housing assembly.

Seals 24 may be provided within a groove of the connection portions 13 sealing the connection portions 13 against the flange portions 23. The seals 24 may be made of an elastic material and prevent leakage between the inside of the fluid ports 11, 12 and the outside of the structure.

There may be a narrow circumferential gap 15 between the side flange portion 14 and the sleeve nut 3. The width of the gap 15 may correspond to 50% to 200% of the thickness of the connector 2 walls. The connectors 2 may be formed as identical parts. In alternative embodiments, only one fluid port 11, 12 may be provided or the fluid ports 11, 12 may be arranged other than coaxially. For example, the fluid ports 11, 12 may be arranged at an angle of between 0° and 180° to each other.

The connection portions 13 of the aluminium housing 1 are provided for connecting the aluminium housing 1 to the connectors 2. The fluid ports 11, 12 may be arranged at least partially within the connection portions 13. The connection portions 13 of the first embodiment comprise threaded portions for screwing the sleeve nut 3 to the aluminium housing 1.

The connection portions 13 may be oriented coaxially with respect to each other. The connection portions 13 may be oriented concentrically with respect to their respective fluid port 11, 12. The connection portions 13 and/or the side flange portion 14 may protrude from a central structure of the aluminium housing 1 and/or may be formed integrally with the remainder of the aluminium housing 1. In alternative embodiments, only one connection portion 13 may be provided.

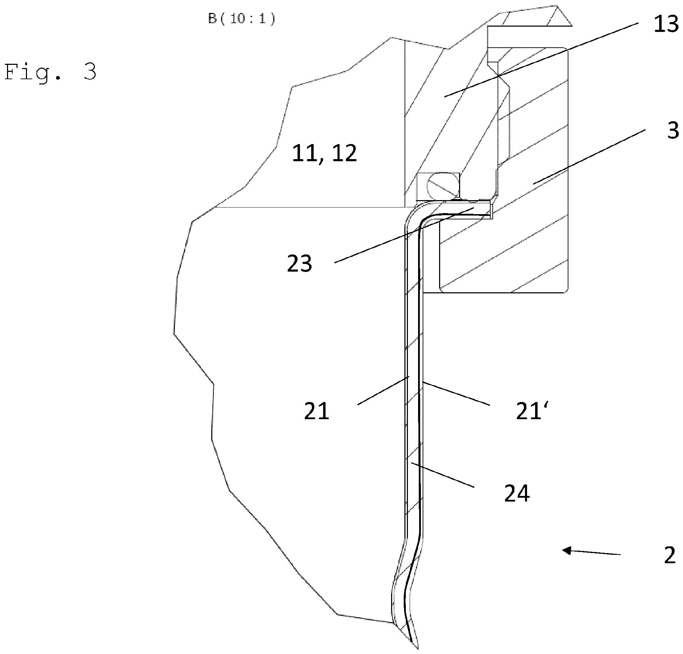

Figure 3 is a detailed section view of the first embodiment of the housing assembly. One portion of a connector 2 is shown fixed against a connection portion 13 by means of a sleeve nut 3. The sleeve nut 3 is screwed onto a threaded portion of the connection portion 13 and presses the connector 2 against the connection portion 13. A portion of the connector 2 is provided between the sleeve nut 3 and the connection portion 13. The flange portion 23 of the bi-metal connector 2 may hence be used for receiving a pressure from the sleeve nut 3, forcing the connector 2 against the connection portions 13 of the aluminium housing 1.

The connector 2 comprise an inner copper layer 21, an outer copper layer 21' and an intermediate metallic layer 22. The inner diameter of the inner copper layer 21 may be equal to the inner diameter of the fluid port 11, 12. The flange portion 23 of the connector may be arranged perpendicular to a cylindrical portion 24 of the connector 2.

The copper interiors of the bi-metal connectors 2 make it possible to easily connect the housing assembly to e.g. copper pipes. The copper pipes are not shown in the figures. The copper pipes are usually used to fluidly connect the housing assembly to some heat exchange system.

As the housing assembly comprises an aluminium housing 1, a direct connection, such as brazing, between the housing assembly and some external copper conduits would be much more difficult to provide on the site of a heat exchange system.

The presently described housing assembly comprising the connected bi-metal connector 2 makes it possible to fluidly connect the housing assembly to any suitable copper conduit by e.g. brazing the copper conduit to the inner copper layer 21 of the connector 2. This can be easily done at any given site, as it does not require complicated joining methods.

Standard methods, which are used for connecting copper components to each other, may hence be used for connecting the aluminium housing 1 of the presently described housing assembly to copper pipes. As a result, the presently described housing assembly may be handled as if it was made entirely of more expensive brass/copper materials rather than the presently used aluminium.

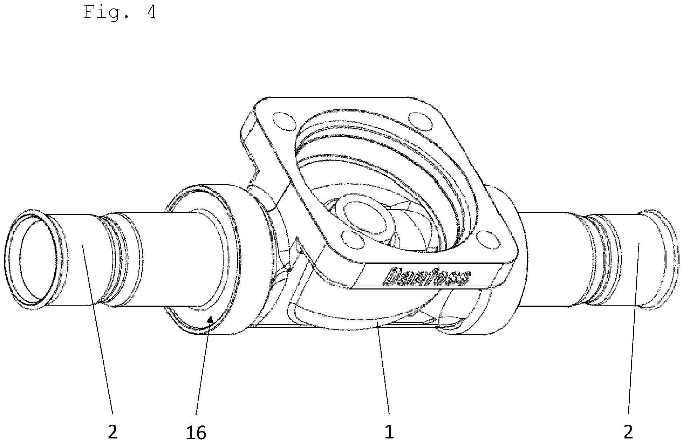

Figure 4 is a perspective view of a second embodiment of the housing assembly. In contrast to the first embodiment, no sleeve nuts 3 are used to connect the connector 2 to the aluminium housing 1. Rather, circumferential grooves 16 are provided at the aluminium housing 1, into which the connectors 2 may be partially inserted.

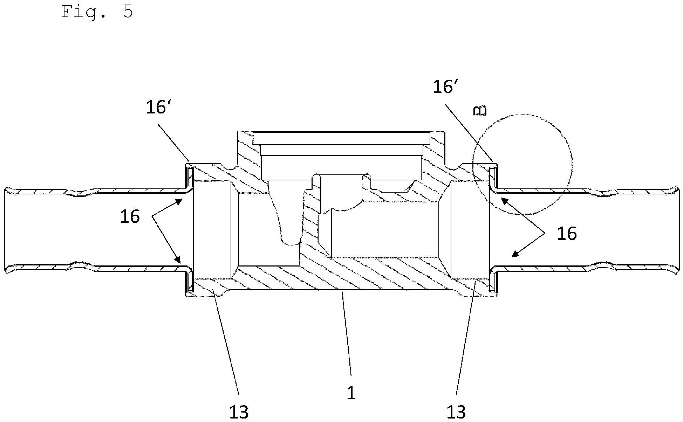

Figure 5 is a section view of the second embodiment of the housing assembly. The connection portions 13 of the second embodiment comprise the circumferential grooves 16, which are bound by radially outer walls 16'. The grooves 16 may have a circular plane surface contacting the connector 2 and extending in a radial direction. The grooves 16 may comprise welding portions and/or brazing portions for connecting the connector 2 to the aluminium housing 1. The welding and/or brazing portions may extend in a circumferential direction of the grooves 16. The radial, axial and circumferential directions may be referenced to the cylindrical connector 2 geometry.

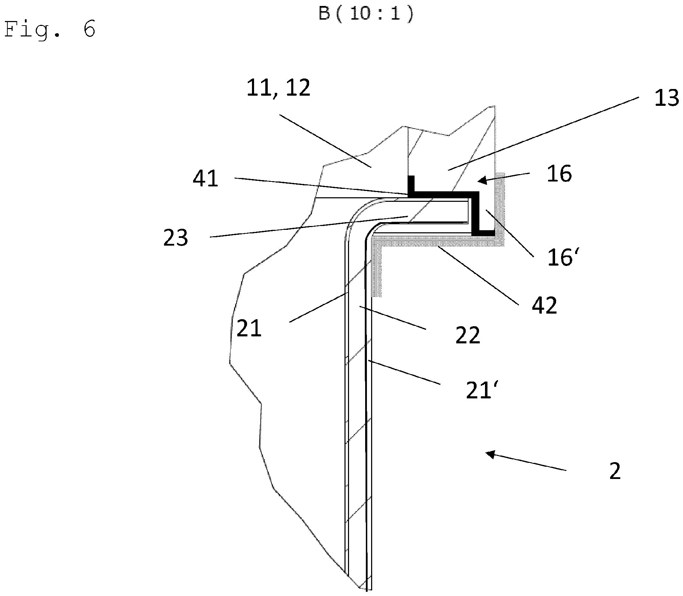

Figure 6 is a detailed section view of the second embodiment of the housing assembly. As can be seen more clearly than in the previous figure, the inner copper layer 21 is brazed and/or welded to the connection portion 13 of the aluminium housing 1. The connector 2 may comprise a flange portion 23 oriented in a radial direction of the connector 2. The inner copper layer 21 may be provided at least partially on the flange portion 23 for contacting the connection portion 13 of the aluminium housing 1. The connections portion 13 may be formed integrally with the housing 1.

The bi-metal connector 2 may be screwed, furnace brazed, conveyor belt brazed, induction brazed, laser brazed, laser welded without a filler, laser welded with a filler, stir welded, rotational welded, ultrasonic welded, electromagnetic pulse welded, TIG welded, and/or MIG welded to the aluminium housing 1. Typically, a single joining technology may be used. However, combinations of two or more of the above joining technologies may be applied as well. The connection between the connector 2 and the connection portion 13 may be provided along the flange portion 23 and the groove 16.

The inside and/or outside of the intermediate metallic layer 22 is covered partially or completely by the inner and/or outer copper layer 21, 21'. An interior side of the intermediate metallic layer 22 may be connected to an exterior side of the inner copper layer 21 via a material connection, while an exterior side of the intermediate metallic layer 22 may be connected to an interior side of the outer copper layer 21 via a material connection.

A galvanic corrosion protection 4 may be provided at the connection between the bi-metal connector 2 and the connection portion 13 of the housing 1. As examples of galvanic corrosion protection 4, a coating layer 41 such as a paint coat or a varnish layer is shown between the bi-metal connector 2 and the connection portion 13. The coating layer 41 may be provided within and beyond the circumferential groove 16 in which the connector 2 is accommodated. Additionally or alternatively, an external protection 42 such as a heat shrinkable tubing is shown covering the connection between the bi-metal connector 2 and the connection portion 13.

The invention is also directed at a set comprising an aluminium housing 1, at least one bi-metal connector 2 and a sleeve nut 3 for a housing assembly according to at least claim 6. The set may be provided in a state, in which its components are at least partially disconnected from each other. A user may connect the components according to existing requirements.

The presently described invention also covers embodiments, in which the features of the various embodiments are combined with each other.

## Claims

1. Housing assembly for use in a heat exchange system, comprising an aluminium housing (1) with at least one fluid port (11, 12) connected to a bi-metal connector (2), wherein the bi-metal connector (2) comprises an inner and outer copper layer (21, 21') and an intermediate metallic layer (22) made of a different material than the inner and outer copper layer (21, 21'), and wherein the aluminium housing (1) comprises at least one connection portion (13) for connecting the bi-metal connector (2).

2. Housing assembly according to claim 1, **characterized in that** the connection portion (13) comprise threaded portions, welding portions, and/or brazing portions and/or that the intermediate metallic layer (22) is made of steel, preferably stainless steel and/or that at least two connection portions (13) are provided.

3. Housing assembly according to any of the previous claims, **characterized in that** the connection between the bi-metal connector (2) and the housing (1) comprises a galvanic corrosion protection (4).

4. Housing assembly according to any of the previous claims, **characterized in that** the inner and/or outer copper layer (21, 21') is brazed and/or welded and/or glued and/or press fit to the aluminium housing (1).

5. Housing assembly according to any of the previous claims, **characterized in that** the bi-metal connector (2) is threaded, furnace brazed, conveyor belt brazed, induction brazed, laser brazed, laser welded without a filler, laser welded with a filler, stir welded, rotational welded, ultrasonic welded, electromagnetic pulse welded, TIG welded, and/or MIG welded to the aluminium housing (1).

6. Housing assembly according to any of the previous claims, **characterized in that** the intermediate metallic layer (22) is covered partially or completely by the inner and/or outer copper layer (21, 21').

7. Housing assembly according to claim 2, **characterized in that** a sleeve nut (3) is screwed to the threaded portion of the connection portion (13) and that a portion of the bi-metal connector (2) is provided between the sleeve nut (3) and the connection portion (13).

8. Set comprising an aluminium housing (1), at least one bi-metal connector (2) and a sleeve nut (3) for a housing assembly according to at least claim 7.
